# EUROPEAN PATENT APPLICATION

(11) **EP 2 439 909 A1**
(43) Date of publication of application: **11.04.2012**
(21) Application number: 10306089.3
(22) Date of filing: 06.10.2010
(51) Int. Cl.: H04L 29/08

(54) **Method for establishing a communication session**

(71) Applicant: Alcatel Lucent, 75007 Paris (FR)
(72) Inventor: Van Broeck, Sigurd, 2980 Zoersel (BE); Van den Broeck, Marc, 2860 Sint-Katelijne-Waver (BE); Lou, Zhe, 2000 Antwerp (BE)
(74) Representative: ALU Antw Patent Attorneys

(57) **Abstract**

The present invention relates to a Method for establishing a communication session, under control of a communication server, between at least two geographically dispersed users of a plurality of geographically dispersed users of a communications system. Each user of the plurality of users is being associated with at least one communications device of the communications system and furthermore each communication device being associated with a user of the plurality of users, being coupled to the communications server over at least one interconnected communications network. This method comprises the steps of first Monitoring for each user of said plurality of geographically dispersed users, at least one sensor, where the at least one sensor indicates at least partially, the user context of the associated user and subsequently the step of determining by means of reasoning for each user of the plurality of geographically dispersed users a communication availability, at least based on said at least one sensor monitored.

## Description

The present invention relates to a method for establishing a communication session as described in the preamble of claim 1, a related system as described in the preamble of claim 5 and related communications server as described in the preamble of claim 9.

Such a method for establishing a communications session is well known in the prior-art. Usually, such a communication session, is established between a plurality of geographically dispersed communication devices where each communications device of the plurality geographical dispersed communication devices is associated with a user and the plurality of geographical dispersed communication devices each are coupled to the communications server over at least one interconnected communications network, wherein the establishment is initiated by a user of a first communications device. Such call may be established if a user of at least one further communications device accepts such call because he is available or reject or miss a call because for some reason is not available.

In case people are located in the same physical location, anyone is able to start unscheduled casual communications easily e.g. when someone walks by a person that they needed to talk to, they just may address the person in order to start a conversation. If colleagues sitting in the neighborhood are involved in a discussion, anyone is able to just join the discussion or in case some person is on the phone, people can see that he/she currently is not available for discussion. In these situations, people may or may not have immediate feedback on their questions, opinions and worries.

However, in case people are not located in the same physical space, the visibility of a person is less and hence there is no or restricted view on availability of the meant person. Hence in communications systems with geographical dispersed communication devices the users of such system are not able in an easy way to start unscheduled casual communications and there is a higher threshold to initiate a communications session due to the restricted visibility of people.

Furthermore, even though current electronic communications applications provide people with the presence state of their colleagues buddies and so on, this presence information still does not share sufficient information for enabling people to start up spontaneous casual communications between multiple persons.

An objective of the present invention is to provide a communications method of the above known type but wherein unscheduled -, casual communications are better supported.

According to the present invention, this object is achieved by the method according to claim 1, a related system as described in claim 5 and a related communications server as described in claim 9.

Indeed, by at first monitoring for each user of a plurality of geographically dispersed users at least one sensor where the at least one sensor indicates at least partially, the user context of the user associated, subsequently for each user of the plurality of geographically dispersed users a communication availability can be determined at least based on the at least one sensor monitored.

The at least one sensor to be monitored for each user in this present invention, may comprise physical as well as electronic sensors that report the user's context. Such sensors may be hardware sensors and software sensors. Examples of hardware sensors are pressure sensor, light sensor, temperature sensor, location sensor, camera sensor, etc. Besides its individual usage, sensors can be grouped together to detect more abstract information. A helmet equipped with many sensors is able to monitoring emotions of a user. Examples of software sensors are application detection software, service detection software, keyboard/mouse event detection software, etc.

Hence, each sensor of the at least one sensor indicates a part of the user context as each sensor only indicates a single characteristic of the context of a user.

All sensors of the at least one sensor indicated the context of a user from which a communications availability of each user can be determined by means of reasoning. The communications availability of a user can be determined from the at least partial context that is indicated by the at least one sensor, by reasoning this at least partial context related to this at least one sensor, i.e. all outputs of the at least one sensor with default or customized rules.

The communications availability is a status of a user of the meant associated communications device where the communications availability indicates the readiness for participating in any discussion.

Furthermore, such communications availability may include a number of gradations of readiness for participating in communication sessions, like a user is ready to participate in serious, business discussion, personal discussion, or just a chat.

The user may indicate he can be available for business meetings but not for spontaneous informal discussions as he wants to concentrate on his current task. Opposite, during, the off-time a user can indicate he is not ready for any business discussions, however he may be available for spontaneous informal discussions/talks with his friends, relatives, buddies, etc.

Finally at least based on outputs of the at least one sensor determined by monitoring the at least one sensor a communications availability is determined by means of reasoning,

The mentioned reasoning may be executed by a rule engine. At least these outputs of the at least one sensor are applied as an input for the rule engine that based hereupon together with a set of rules determines this communications availability for a user associated with a communication device.

Such rule engines here may be one of existing rule engines like Jena, Protégé, Clips, Drools, etc or possibly others.

Further, in order to establish a communications session between at least two possibly geographically dispersed users of a plurality of such users via at least one communications device of each such user, the communications availability for each user of the plurality of geographically dispersed users is gathered and based on the status, i.e. the communications availability of each user of the plurality of users, is ready for accepting any communication it is determined which of the user associated communications devices of the plurality of geographically dispersed communication devices are to be involved in the connection.

Users of the communications system having a communications availability status which is "ready for any communication" will be automatically involved in a communications session to be established, communications devices not available for any communication will be excluded from the communications session to be established.

This knowledge on communications availability of each user of a communications system supporting the establishment of unscheduled -, casual communications as they can be established automatically or give users view on the availability so that users immediately may be aware of possibilities to establish an unscheduled -and/or casual communications.

A further characteristic feature of the present invention is described in claim 2, claim 6 and claim10.

Further a communications session between associated communication devices of at least two users of said plurality of geographically dispersed users is established based on the determined communication availability of each user of the plurality of geographical dispersed users of the communication system.

A further characteristic feature of the present invention is described in claims 3 and claim 7 and claim11.

The determined communications availability of each user may be presented at an associated communications device of at least one other user of said plurality of geographically dispersed users of said communications system.

This presentation gives the users of the communications system a view on the communication availability of at least one other user of the communication system, in this way supporting the establishment of unscheduled -, casual communications.

Such presentation may be done in picture e.g. by means of virtual representation like an avatar or in a textual manner.

A further characteristic feature of the present invention is described in claims 4 and claim 8 and claim 12.

The communications availability status of each user of the plurality of geographical dispersed users devices may be additionally be based on non sensor context information like, the time of the day and calendar of a the user of a communications device, a user-profile of an associated user, and/or a context of the user associated to the communications device, for instance a user-profile defines that he prefers to be interrupted when he is doing administrative tasks. Other times no disturb. His calendar shows that he reserved 2 hours from 15.00 to 17.00 for administrative tasks this afternoon. In that case he will be available for communication from 15.00 to 17.00 this afternoon.

In addition to the output of the at least one sensor determined by monitoring also non sensor context information e.g. , the time of the day and calendar of a the user of a communications device, a user-profile of an/said associated user, and/or a context of the user associated to the communications device may be applied as inputs for a rule engine to determine the communications availability of an associated user.

In this manner by applying additional context information on each user of the plurality of locally dispersed users the communications availability can be determined even more accurate.

Further characterizing embodiments of the present communications method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

The above and other objects and features of the invention will become more apparent and the invention itself will be best understood by referring to the following description of an embodiment taken in conjunction with the accompanying drawings wherein:
FIG.1 represents a functional representation of the communications system wherein the implementation of the present invention is realized.
FIG. 2 represents the functional representation of the communications server CS in the communications system according to the present invention.

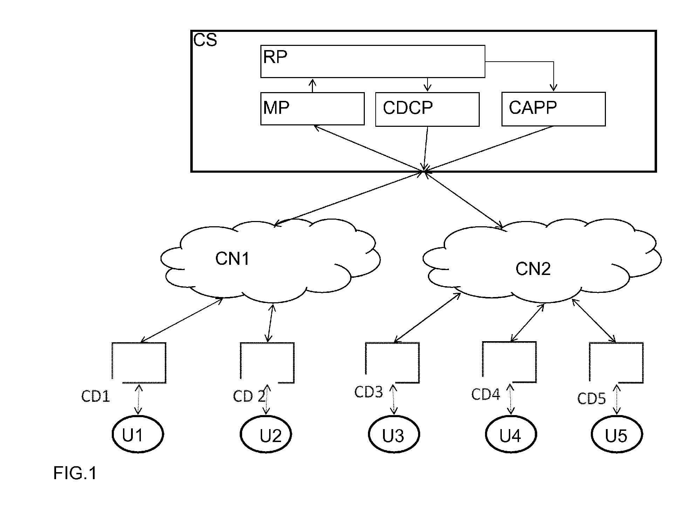

In the following paragraphs, referring to the drawings, an implementation of the method and the related devices according to the present invention will be described. In the first paragraph of this description the main elements of this network as presented in FIG. 1 and FIG.2 are described. In the second paragraph, all connections between the before mentioned network elements and described means are defined. In the succeeding paragraph the actual execution of the method for establishing a communications session.

An essential element of this embodiment of the present invention first includes a plurality of geographically dispersed communication devices, CD1, CD2, CD3, CD4, CD5 each being communications devices of users that are being geographically dispersed, working at home at customer site in the office or elsewhere.

Each user of the plurality of geographically dispersed users U1, U2, U3, U4, and U5 is being associated with At least the respective communication devices CD1, CD2, CD3, CD4, and CD5. The association between each user and the respective communications device is presented in both figures FIG. 1 and FIG. 2 by dashed lines.

Such a communication devices may be any mobile communications device like a PDA or smart phone or any other mobile communications device or any fixed communications device like a personal computer a desk-phone or any other fixed communications device.

Each user of the plurality of geographically dispersed users is in a fixed way or temporarily being associated with at least one sensor for monitoring user context of this respective user, This at least one sensor represents, at least partially, the user context of the user associated.

Such a sensor may temporarily be associated with a user which means that a certain sensor first detects the identity of a user and subsequently a further context like an activity, a location etc. Alternatively such a sensor may be associated with a user in a fixed way, in which case the sensor may be incorporated in a communications device of the user or being coupled to such communications device of the user. Examples of such sensors are physical as well as electronic sensors that report the user's status such sensors may be pressure sensor, light sensor, temperature sensor, location sensor, emotions etc.

Such communications device may comprise a sensor for monitoring the at least partial, user's context.

Such at least one sensor, of each user's communications device, to be monitored may comprise physical as well as electronic sensors that reports the user's status such sensors may be may be pressure sensor, light sensor, temperature sensor, location sensor, etc.

Further the communications system comprises a communications server CS for controlling the establishing of a communication session between communication devices of the plurality of geographical dispersed communication devices.

Each of the plurality of geographically dispersed communication devices CD1, CD2, CD3, CD4, CD5 being coupled to said communications server over at least one interconnected communications network CN1, CN2.

The Communications server CS first comprises a monitoring part MP that is adapted to monitor for each user of the plurality of geographical dispersed user, at least one sensor associated with the user, where the at least one sensor, at least partially, represents the user activity of the user associated and a reasoning part RP that is adapted to determine for each user of the plurality of geographical dispersed users a communications availability of the user associated, at least based on the at least one sensor monitored. This reasoning part RP further may be adapted to determine the communications availability additionally based on non sensor context information being either one or more of the following: a user-profile of an associated user, a context of the respective associated user like a calendar.

The communications server CS further comprises a communication device coupling part CDCP that in turn is adapted to establish a communications session between associated communications devices of at least two users of the plurality of geographically dispersed users based on the communication availability of each user of said plurality of geographically dispersed users of the communications system.

Additionally the communications server CS may comprise a communications availability presentation apart CAPP, adapted to present said communications availability of each user on an associated communications device of at least one other user of said plurality of geographically dispersed users of said communications system.

Each of the communication devices CD1..CD5 is coupled via the respective communications networks CN1, CN2 to the Communications server CS.

The communications server CN has an input/output-terminal that is at the same time an input-terminal of the monitoring part MP that in turn is coupled to the reasoning part. The reasoning part RP further is coupled to the communication device coupling part CDCP and additionally to a communications availability presentation apart CAPP. The reasoning part further is coupled to the communications availability presentation apart CAPP.

Both communication device coupling part CDCP and additionally to a communications availability presentation apart CAPP are coupled to the input/output terminal of the communications server CS.

Sensors may be coupled to a user device or Communications server over any wired or wireless connection.

In order to explain the present invention it is assumed that a group of users of a communications system users U1, U2, U3, U4, U5 each own at least one communications device. Although such a group of users usually includes a large number of users, in this description for reasons of simplicity only five users; users U1, U2, U3, U4, U5 with at least respective communications devices CD1, CD2, CD3, CD4, and CD5 are described.

First it is assumed that communications device CD1 is a mobile phone that belongs to user U1 who is associated with this phone by means of a subscription and belonging mobile identification like a mobile phone number. Communications device CD2 is a personal computer that belongs to a second user U2, this user is associated to this PC by means of a user account on this personal computer and an assigned IP-address. Communications devices CD3 and CD4 respectively belong to a third user U3 and a fourth user U4 both are personal computers. Users U2, U3 and U4 all have either a communications application installed on their Personal computer or alternatively may have an additional associated (mobile) phone. Communications device CD5 is a mobile phone that belongs to a fifth user U5 who is associated with this phone by means of a subscription and belonging mobile identification like a mobile phone number. All users are colleagues and work for company A.

In addition the user profile of both user 1 and user 5 includes the tag that they are members of "project 1"

Further it is assumed that each of the communications devices CD2, CD3 and CD4 include an activity sensor that detect which applications currently are active for determining the current activity of the respective associated users: the second user U2 is working on a WORD-document being a certain deliverable of project 1 at his Personal computer CD2, and additionally has browser application open, the third user U3 is working on an EXCEL-document also being a deliverable for project 1 at Personal computer CD3 and also has a browser application open. Both users U2 as User U3 are working in a remote office of company A. The fourth user U4 having a Personal computer CD4 has no active application open but is reading a document. User U4 currently is working at home. which location is determined based e.g. on the location of his mobile phone, assigned IP-address. Both the first user U1 and the fifth user U5 are in the same (meeting-) room at headquarters of the company A with sensors for detecting presence of both users in order least one sensor for monitoring activities of the associated user. Furthermore both mobile phones CD1 and CD5 additionally possess sensors for detecting speech or other environmental sounds/noise, furthermore both communication devices detect the body gesture of the first user U1 and the fifth user U5.by means of e.g. accelerator sensors and orientation sensors, heart rate- , skin conductivity- , and skin temperature sensors etc....For instance a user has a habit/body gesture of trembling his legs when he gets nervous. And usually he puts his mobile phone in his trousers' pockets. In that case, when he is trembling his legs, the mobile accelerometer and orientation sensor detects this body gesture. By reasoning, the system detects he is nervous now. In addition there may be a rule that says in case a person is nervous, or not feeling well this person is not ready for communications and hence is preferably not to be disturbed. Other way around if it is detected that a person is in a good mood feeling well and in addition there is rule saying that person feeling well may be ready for being involved in communications and hence may indeed be joined to an ongoing communications session.

Communications devices CD2, CD3 in addition possess sensors for determine locations with e.g. Bluetooth, wifi, zigbee technologies or any other wireless technologies.

It now is assumed that it is detected that both the first user and the fifth user U1 and U5 are located in the same room. A microphone of mobile phone CD1 senses a discussion between both users U1 and U5; both users are involved in a formal talk.

The monitoring part MP of the communications server monitors for each user U1, U2, U3, U4 and U5 all sensors where the combination of this at least one sensor represents the user activity of the user associated. For Communications device CD1 and CD5 a remote sensor in a certain room, in a communication with the respective mobile phones of this first user U1 and fifth user U5, determines that both users are located in this room (based on the exchanged mobile identification of respective mobile phones).

Furthermore, for the respective third, fourth and fifth user U2, U3 and U4 it is detected by activity sensors that each of this respective users is working on their personal computer and/or and by checking a user-profile of each of the respective users that each of the respective users are working on the same project "project 1 ".

Subsequently the reasoning part RP determines for each user U1, U2, U3, U4, U5 of this plurality of geographically dispersed users communication-availability. The reasoning part determines the communication availability of each user by first gathering all results of the sensors monitored for the meant user and based on rules available in a database associated with the reasoning part RP.

For the first user U1 it is determined that he is located in this room together with the fifth User U5 and this first user is in conversation probably with the fifth user. For user 1 there is a rule in the rule base that says if user U1 has a meeting with someone else in a room, NO disturbing. In that case, U2, U3 and U4 are not able to communicate with U1 at this moment. Further there may be a rule: if User U1 and/or user U5 is/are not in a meeting user U1 is available for communication sessions with project members of project 1.

The communication device coupling part CDCP subsequently establishes a communications session between associated communication devices User 2 and user 3 and user 4 based on the reasoning of the reasoning part: "When several people work on the same project, a communication connection should be established among those people".

As soon as user U1 finishes his conversation with User U5 this is detected, the condition is forwarded to the reasoning part that in turn instructs the communication device coupling part CDCP to add users U1, U5 to the already ongoing communications session between established for the respective users User 2 and user 3 and user 4.

As user 3 U3 has a scheduled meeting in his outlook-calendar and as there further is a rule that says if a user has a planned meeting in his calendar with a certain person, the reasoning part from the moment the scheduled meeting starts this user U3 is removed from the already established ongoing communications session between established for the respective users, user 1, User 2, user 4 and User 5.

In the following paragraph a further example of reasoning is depicted:

Senka arrives at the company. A location sensor on her open working desk detects she is sitting by. There is a rule saying: When a location sensor on an open working desk detects a user sitting next to it, then move the virtual representation of Senka to a predefined virtual room presentation of the communication system indicating that she is in the office and if necessary may be disturbed hence is available for communications.

So Senka's virtual representation, by means of the communications availability presentation apart CAPP, moves to the virtual room, where she sees the virtual representations of Jan and Wolfgang are already there. Senka starts to work on the TA2 project by opening a TA2 deliverable, which will be detected by an application detection sensor (software) running on her computer. This change is presented by means of communications availability presentation part CAPP that modifies the virtual representation of Senka indicating a TA sign to the virtual representation., At the mean time, the system detects both Jan and Wolfgang are working on TA2 project as well. They both also have A TA sign added to their respective virtual representation. There is a further rule saying:

When several people work on the same project in an open working desk, a communication connection should be established among those people.

When Senka wants to ask Jan a question, she simply uses the established communication connection to carry her audio/video/text message.

It is to be noted that although not explicitly described in previous embodiments, numerous possibilities of sensors, rules and combinations thereof and resulting communications availability presentations and/or communications session establishment can be contemplated. A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for establishing a communication session, under control of a communication server, between at least two geographically dispersed users of a plurality of geographically dispersed users of a communications system, each user being associated with at least one communications device of said communications system, each communication device being associated with a user of said plurality of users, being coupled to said communications server over at least one interconnected communications network (CN1, CN2), **CHARACTERISED IN THAT** said method comprises the steps of:
a. Monitoring for each user of said plurality of geographically dispersed users, at least one sensor, said at least one sensor indicating at least partially the user context of said user associated; and
b. Determining by means of reasoning for each user of said plurality of geographically dispersed users a communication availability, at least based on said at least one sensor monitored.

2. Method for establishing a communication session, according to claim 1, **CHARACTERISED IN THAT** said method further comprises the step:
c. Establishing a communications session between associated communication devices of at least two users of said plurality of geographically dispersed users based on said communication availability of each user device of said plurality of geographical dispersed users of said communication system.

3. Method for establishing a communication session, according to claim 1 or 2, **CHARACTERISED IN THAT** said method further comprises the step:
d. presenting said communications availability of each user on an associated communications device of at least one other user of said plurality of geographically dispersed users of said communications system.

4. Method according to claim 1 **CHARACTERISED IN THAT** said step of determining said communication availability in addition may be based on non sensor context information.

5. Communications System, for establishing a communication session between a plurality of geographically dispersed users of a communication system, each user being associated with at least one communications device of said communication system, each communications device being coupled over at least one interconnected communications network (CN1, CN2) to a communications server (CS) (for controlling said establishing of said communication session), **CHARACTERISED IN THAT** said communications system comprises:
a. a monitoring part (MP), adapted to monitor for each user of said plurality of geographical dispersed users, at least one sensor , said at least one sensor indicating at least partially the user context of said user associated; and
b. a reasoning part (RP), adapted to determine by means of reasoning for each user of said plurality of geographically dispersed users a communication availability of said user associated, at least based on said at least one sensor monitored.

6. Communications System according to claim 5, **CHARACTERISED IN THAT** said communications system further comprises:
c. a communication device coupling part (CDCP), adapted to establish a communications session between associated communication devices of at least two users of said plurality of geographically dispersed users based on said communication availability of each user device of said plurality of geographical dispersed users of said communication system.

7. Communications System according to claim 5 or 6 **CHARACTERISED IN THAT** said system further comprises:
d. communications availability presentation apart (CAPP), adapted to present said communications availability of each user on an associated communications device of at least one other user of said plurality of geographically dispersed users of said communications system.

8. Communications System, according to claim 5, **CHARACTERISED IN THAT** said reasoning part (RP) further is adapted to determine said communication availability additionally based on non sensor context information.

9. Communications server (CS) for use in a Communications System according to claim 3, **CHARACTERISED IN THAT** said communications server (CS) comprises:
a. a monitoring part (MP), adapted to monitor for each for each user of said plurality of geographical dispersed users, at least one sensor , said at least one sensor indicating at least partially the user context of said user associated; and
b. a reasoning part (RP), adapted to determine for each user of said plurality of geographically dispersed users a communication availability of said user associated, at least based on said at least one sensor monitored.

10. Communications Server (CS), according to claim 9, **CHARACTERISED IN THAT** said communications server (CS) further comprises:
c. a communication device coupling part (CDCP), adapted to establish a communications session between associated communication devices of at least two users of said plurality of geographically dispersed users based on said communication availability of each user device of said plurality of geographical dispersed users of said communication system.

11. Communications System according to claim 9 or 10, **CHARACTERISED IN THAT** said communications server (CS) further comprises:
d. communications availability presentation apart (CAPP), adapted to present said communications availability of each user on an associated communications device of at least one other user of said plurality of geographically dispersed users of said communications system.

12. Communications Server (CS), according to claim 9 or 10, **CHARACTERISED IN THAT** said reasoning part (RP) further is adapted to determine said communication availability additionally based on non sensor context information.
